(19) Europäisches Patentamt
European Patent Office
Office européen des brevets

(11) **EP 2 610 792 A1**

(12) **EUROPEAN PATENT APPLICATION**

(43) Date of publication:
**03.07.2013 Bulletin 2013/27**

(51) Int Cl.:
***G06Q 10/06*** (2012.01)

(21) Application number: **12199153.3**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.12.2011 ES 201132142**

(71) Applicants:
- **Fundacio Barcelona Digital Centre Tecnologic 08018 Barcelona (ES)**
- **Caixa d'Estalvis I Pensions de Barcelona"La Caixa" 08028 Barcelona (ES)**

(72) Inventors:
- **Felguera Segador, Antonio 08970 Sant Joan Despi (Barcelona) (ES)**
- **Fernandez Escabias, Luis Angel 08003 Barcelona (ES)**
- **Riccardi, Marco 08009 Barcelona (ES)**

(74) Representative: **Mohammadian, Dario Bardehle Pagenberg Avenida Diagonal 420 1-1 08037 Barcelona (ES)**

(54) **Methods, devices and system for the reduction of the exposure time window of electronic security incidents**

(57) The described invention proposes a system and a measurable automatic process that is capable to orchestrate the different actors and resources involved in the security incident mitigation process, in order to maximize the reaction effectiveness while minimizing the user's exposure-window time.

**FIG. 1**

**Description**

**FIELD OF THE INVENTION**

The present invention relates to the field of network security, and in particular, to the automatic management of the mitigation of security incidents in public and private networks.

**BACKGROUND OF THE INVENTION**

During the last decade, the presence of the Internet in our daily life has been steadily increasing. Currently, several web applications (i. e. home-banking or social-networks) are comparable to common desktop applications in terms of functionality and performance. Thus, they are regularly needed and used to develop our common economic, social, and communication activities.

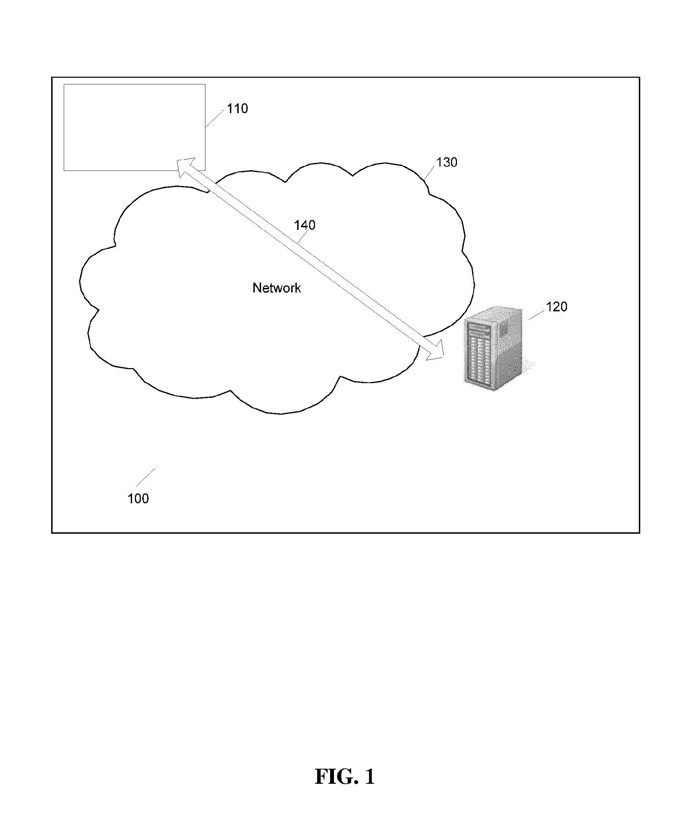

FIG. 1 shows a general infrastructure where the proposed invention can be applied. The system 100 has at least one Internet user that uses a software installed in at least one network device 110 to access, though a data network 130, to contents and applications (hereinafter services) present in the network. Furthermore, Internet Service Providers, ISP, 120, deploy their business operations mainly relying on the correct functionality and availability of their services. Within this service offer, connections 140 between devices 110 and servers 120, can be established.

On the other hand, attacks affecting these services have been developed as well, generally moved by different purposes such as economic, political, social or military. The consequences of such attacks represent for an ISP an Electronic Security Incident, ESI.

Some of the more common ESI are:

- The unauthorized use of ISP corporate image.
- The replication or imitation of the ISP services, or *phishing,* with the goal of stealing the user service credentials generally by means of deception techniques.
- The voluntary exhaustion of the ISP's computational resources with the purpose of ceasing or significantly degrading them.
- The installation of a malicious software, or *malware,* into the device used by the user to access the Internet, with the purpose of stealing the ISP service credentials, altering/hijacking banking transactions, spying user activities or, more generally, damaging in any way the normal user activity or the ISP's corporate image.

Due to the Internet's nature, many attacks cannot be avoided and are subsequently turned into an ESI, by requiring the ISP to deploy a set of countermeasures with the aim of minimizing the global incident impact. In addition, these attacks have increased during last years and a further raise is expected in the future. Thus, the individualized human attention dedicated to the management of every incident is made more and more difficult until becoming infeasible.

Usually, ESI mitigation strategies are a mix of automatic, semi-automatic, and manual activities. The capability of managing all the different actors and resources involved in the process, and the reaction effectiveness (meant as the sum between the efficacy and the efficiency), are key factors for reducing the global incident impact.

Regardless of the incident type, some generic security incident management protocols conceptualize how to manage different activities and actors, but don't specifically contemplate the nature of the incident. Such protocols don't either consider an optimization function as a driver for their actions, that is probably based on time consuming, resources saving, effectiveness, or collateral damage, to name a few.

Some other incident management protocols that refer to IT attacks, introduce concepts such as "ticket", which enriches the aforementioned model within an IT information management environment. These protocols don't introduce any remarkable improvements to the previously described ones, or define specific metrics to optimize any specific driver function.

Finally, some initiatives propose software tools that are focused on the automation of some steps of the ESI response process, such as the automatic generation of technical information. However, these fragmented approximations are specifically address to reduce the workload of the incident response teams, and don't provide real solutions or improvements for the effectiveness of the whole process.

Therefore, the need has been identified in improving the management of security incidents by minimizing the global incident impact in an optimized manner.

**SUMMARY OF THE INVENTION**

It is an objective of the invention to provide solutions to the described problems. In particular, the invention proposes a system and an automated process able to orchestrate the different actors and resources implied in the whole security incident management process. The objective of the invention is to maximize the effectiveness of the countermeasure actions while minimizing the user's exposition-time window.

It is the object of the invention to provide a device for the automatic management of security incidents.

It is another object of the invention to provide a method for the automatic management of security incidents.

It is another object of the invention to provide a computer readable medium, which contains instructions that, once executed on a computer, allows the automatic management of security incidents.

It is another object of the invention to provide a system for the automatic management of security incidents.

The invention provides methods and devices that implement various aspects, embodiments, and features of the invention, and are implemented by various means. For example, these techniques may be implemented in hardware, software, firmware, or a combination thereof.

For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (e.g. procedures, functions, and so on) that perform the functions described herein. The software codes may be stored in a memory unit and executed by a processor. The memory unit may be implemented within the processor or external to the processor.

Various aspects, configurations and embodiments of the invention are described. In particular the invention provides methods, apparatus, systems, processors, program codes, and other apparatuses and elements that implement various aspects, configurations and features of the invention, as described below.

## BRIEF DESCRIPTION OF THE DRAWINGS

The features and advantages of the present invention become more apparent from the detailed description set forth below when taken in conjunction with the drawings in which like reference characters identify corresponding elements in the different drawings. Corresponding elements may also be referenced using different characters.

FIG.1 shows a global structure of the system where the invention can be implemented.

FIG.2 depicts the device according to one embodiment of the invention.

FIG.3 describes the global operation of the process according to one aspect of the invention.

FIG.4 describes the global operation of the process according to other aspect of the invention.

FIG.5 is a diagram that depicts the chain of external actors according to one aspect of the invention.

FIG.6 represents the state diagram of an incident.

FIG.7 shows a basic format of two messages of the communication protocol.

## DETAILED DESCRIPTION OF THE INVENTION

The proposed invention explains a method to reduce the User Exposure Time Window (UETW) of electronic security incidents ESI through the automatic management and orchestration of the mitigation response and its related resources. Additionally, it also conceptualizes the process measurement metrics, with the objective of evaluating and defining the quality of the distinct steps of the method. Finally it proposes a retro-alimented function for optimizing the overall response process's performance.

In order to achieve it, some vital requirements need to be satisfied:

- Traceability (R1): all the taken decisions must be explained through the events stored in the registries.
- Confidentiality (R2): the nature of the invention requires the no existence of false positives.
- Economicity (R3): because of the number of electronic attacks is every time bigger, the proposed solution has to be economic (in terms of money or not) and scalable.

Generically, the global incident impact depends on the exposition time of the protected asset, the loss cost during the affected time (monetary or not), and the exposition of the asset. Let t be the incident exposition time, C(t) the cost function of the asset protected during time and E, the percentage of the asset exposition to the security incident (of exposition factor).The global economic impact during time is the defined as:

$$A(t) = C(t) \times E \qquad\qquad [\text{expression 1}]$$

On the other hand, in order to know the ESI global cost, the cost of the applied mitigation measures during a specific period must be considered as well. Let M(t) be the cost of the applied mitigation measures during a specific period, the incident global cost is defined as:

$$A(t) = C(t) \times E + M(t) \qquad \text{[expression 2]}$$

Where it can be observed that:

i. The cost function of the asset loss C can be defined as:

$$C(t) \geq 0 \qquad \text{[expression 3]}$$

or

$$C(t+1) \geq C(t) \geq 0 \qquad \text{[expression 4]}$$

This function is independent for the response process by itself, thus it doesn't represent a susceptible variable that can be modified during such process. However, its value depends on the response time t and it can always return a positive or zero result.

ii. The exposure factor E, is considered to be constant over time and it is directly proportional to the nature of the attack and the protection measures implemented during the design time within the considered security environment. Thus, it doesn't depend on the development of the response process, or on any of the optimizations that may be subjected.

iii. The function M(t) depends exclusively on the response processes and on the number of the mitigation actions selected.

Beginning from the cost function C and the measurement function M, in order to satisfy the aforementioned requirements and the invention's objective the process Key Performance Indicator (KPI) are defined as t and M(t). The characteristics of the invention described above, are designed in order to reduce these two variables: achieve the goals of reducing the UETW and increasing the economy factor of it, while satisfying the defined traceability, confidentiality and economy prerequisites.

**Table 1: Case field description**

| Name field | Description |
| --- | --- |
| ID | Unique case identification number |

(continued)

| Name field | Description |
|---|---|
| Title | Reference string of the case |
| Status | Case status (see Figure 3 for more details) during the execution flow. |
| Priority | Case priority |
| Objective | Attack goal (list of elements) |
| Malicious Supporting Infrastructure | (List of one or more elements): list of one or more elements referencing to a Malicious Supporting Infrastructure (hereinafter MSI). |
| **Connection chain, composed by:** | |
| Connection string | (Optional, depending of the case type considered): MSI referencing URI. For example, in case of a *phishing* incident, it would consist in the URI of the fraudulent web page. |
| Domain Name | (Optional, depending of the case type considered): ESI domain name, in case of the whole domain name belong to a MSI. For example, in case of a *malware* attack, it could include the domains name generated by the malware while contacting its C&C. |
| IP Address | (Mandatory): MSI's IP address. |
| Protocol | TCP/IP application protocol used by the MSI |
| Port Number | TCP/IP port number used by the MSI connection. |
| Resolved by | IP address of the DNS server that resolved the domain name (if succeeded) |
| File | (Optional), malicious file supporting the MSI. |
| **ISP Information - administrative contact information of the ISP supporting the MSI:** | |
| Whois Server | IP address of the whois server that provided the following information |
| Name | Name |
| Address 1 | Street Address |
| Address2 | Street Address |
| City | City |
| Postal Code | Postal Code |
| Country | Country |
| Telephone | Telephone number |
| Fax | Fax number |
| E-Mail | E-mail number |
| AS | Autonomous System supporting the MSI. |
| **Domain information, composed by:** | |
| Authoritative DNS | IP address of the authoritative DNS that resolved the domain name (if succeeded). |
| Name | Name |
| Address 1 | Street Address |

| Address2 | Street Address |
|---|---|
| City | City |
| Postal Code | Postal Code |
| Country | Country |
| Telephone | Telephone number |
| Fax | Fax number |
| E-Mail | E-Mail address |
| History | Registry of all the changes, and actions accomplished to the incident case. |

Any identified ESI represents a case and can have two statuses. In the first status, the case has not been confirmed yet as an ESI by the invented system, and is therefore identified as alert. On the other hand, if the case has been confirmed as an ESI, it is identified as incident. A case is received through any of the external communication interfaces that have been deployed by following the automatic method described. The information fields that make part of a case are described in Table 1.

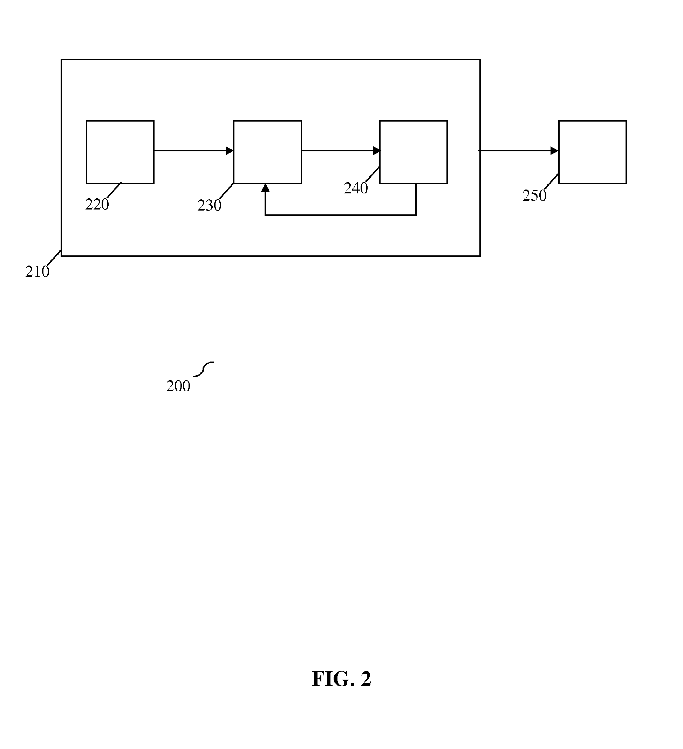

FIG.2 is a representation of the device 200 by one of the invention realizations. The device 200 includes at least one control module 210, and at least a quality module 250. In one aspect, the control module 210 includes at least a resolution module 220, at least a monitor module 230 and at least one countermeasures module 240. However the distinct modules can be integrated inside one or more control modules or be external of the control module. In addition, it cans be integrated in other system devices

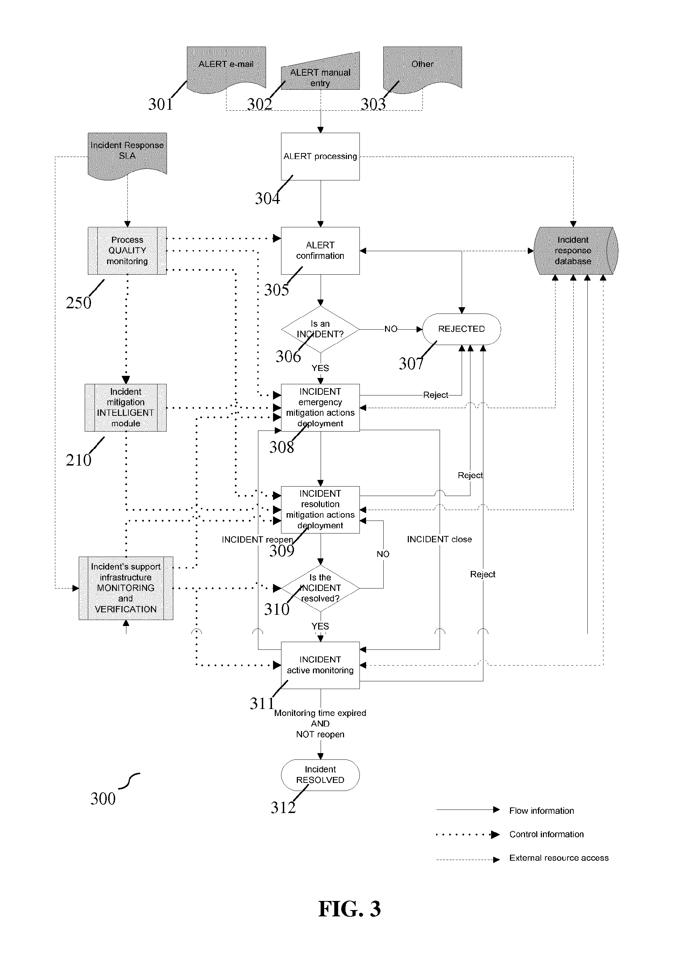

FIG.3 describes the global functionality of the process 300, from the reception of the security alert to the complete mitigation of the attack with the consequential ESI resolution. The various modules in FIG.2 are also represented in this realization in order to demonstrate the relation between the various modules 200 and process steps 300. The expert reader will understand that other dispositions and relations are possible while achieving the same effects. The method design 300, as the set of metrics that will be defined later, aims at maximizing the KPI defined for this application.

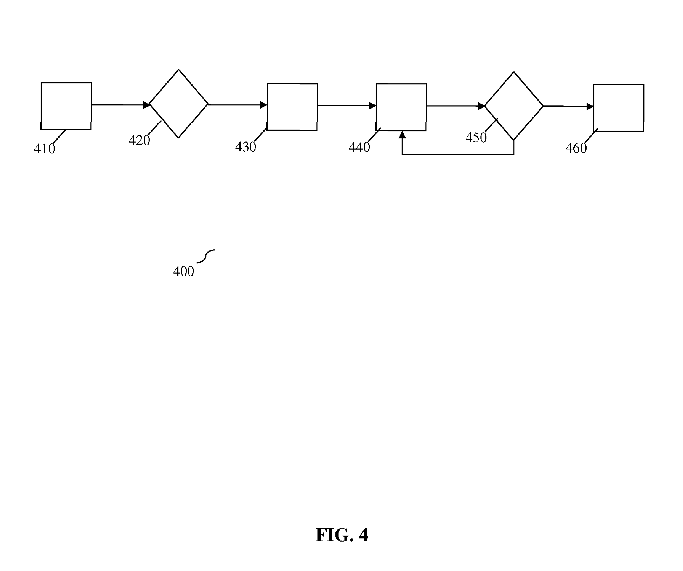

FIG.4 shows another aspect 400 of the process with a representation of the states that a case can be found while its alert and incident phase. A first step 410 is related to the case reception, which is now an alert. A second step 420 is related to the alert verification. A third phase 430 is related to the approval of the alert as an incident, and the verification that it is not a false alert. A fourth phase 440 is related to countermeasures selection and application, which are deployed in order to mitigate the security incident. A fifth stage 450 is related to monitor the incident in an iterative way, in order to verify the effectiveness of the applied countermeasures. A sixth stage 460 is related to the incident confirmation and statistical analysis, like the runtime estimations.

The following will generally describe the process 300, which is also divided into different states, but with a different arrangement. In the first phase the received case 301-304 is accepted as an alert. The next phases 305-307 decide if an alert is an incident or not. If so, it continues to deploy 308-310 a set of emergency countermeasures followed by the deployment of other countermeasures that aims to definitely resolve of the incident. Finally it continues by monitoring 311 the incident in real-time by checking if the incident backs to be active or not. In case that the default monitoring time expires and the incident is not back online, the final resolution of incident 312 is determined.

In the following the different phases of the process 300 are described in more detail. After receiving an alert, either by automatic 301, manual 302, or other 303 means, it is processed 304 in order to verify the overall consistence of the method. These verifications are designed to meet the requirements of reliability R2. Additionally, they are dynamic: they are added during the process time as adaptation to the ESI management scenario, or due to the increased knowledge about its management. Therefore, an adaptive procedure to maximize the reliability of the conflicts resolution is partially provided.

Some of the controls that are part of the consistency rules are:

- The case is not managed
- The case connection string is not in the system domain/IP white list
- The case data are coherent e.g. the IP direction is routable and doesn't belong to any bogus list, or the alert information fields are correct.

If the alert fails to meet any of the consistency rules, and the alert status will be changed to "rejected", and an entry will be recorded into the history field. Once an alert is accepted, its validity is verified at step 305, where the necessary - automatic or manual - tasks are performed in order to assure that the alert is still active, and that it really affects the targeted ISP. At this stage, the full satisfaction of the reliability requirement R2 is fully determined. Automatic tests are in charge of carrying out the necessary confirmation activities, depending on the nature of the attack. On the other hand, manual verifications consist in the communication flow (shown in FIG.4) established between the method and one or more external entities in charge of performing these tasks.

In the next step 306 it is determined whether the result of the alert confirmation is affirmative (if it is actually an alert) or negative (if on the contrary it is not). In the latter case, and in the same way as in the previous step, the event is recorded 307 in the history field, and the alert status is changed to "rejected". Finally, by considering that this process may include tasks performed externally, the quality module monitors the response times in base of the configured service level agreement (hereinafter SLA) and sends satisfaction requirements if necessary.

In the event that the alert is confirmed, it immediately becomes an incident. Thus, such incident is then reported to the group in charge of the incident response, and temporary mitigation actions are executed 308 by the urgent actions module. The set of the temporary mitigation actions that must be deployed is determined by the control module, which builds and executes them in an automatic or manual way. The control module uses the following decision key elements to build the series of actions:

- The pre-configured temporary mitigation actions, their cost and the expected time of their implementation
- The incident characterization
- The incident impact, meant as the objective of itself, i.e. credentials theft, affection of the process capacity, etc.
- The experience of past incidents

Automatic actions will be deployed by their proprietary process while the manual ones will deploy a communicative flow (shown in FIG.4) with the support of external enforcer. Furthermore, the quality module controls the execution times of the process according to the SLA, and communicates with the urgent actions module in order to electronically send the compliance requirements.

Finally, when the temporary mitigation actions (automatic and manual) have been deployed, the method proceeds to deploy the mitigation actions in charge of the final ESI resolution, that represent the complete incident dismantlement. In order to achieve this goal, the resolution module obtains from the control module a set of actions that need to be deployed. As in the previous process, this phase also immediately develops automatic actions as long as developing a communication protocol with the external resources in order to manually executing certain actions. As well as the above process, the method ensures the monitoring of the service agreement level through the quality module but with a difference: the periodic review of the incident resolution, accomplished by the quality module, it is also provided as input to the control module in order to suggest new mitigation actions. These new measures are stored and taken into account even if they have a higher M(t), i.e. a higher cost function of the applied mitigation measures. Through this feature, the overall goal of balancing UETW and M(t) is achieved, and an optimal balance is accomplished by satisfying the R3 requirement.

When the MSI has been finally dismantled and it has been successfully -manually or automatically- verified that the ESI cannot communicate anymore with the malicious infrastructure; the incident passes to a active monitoring state 310 by keeping in contact with the group in charge of the response. Moreover, the monitoring module constantly monitors the incident in order to detect if any reopening happens. In case it detects the resumption of the incident, the incident goes back to the urgent action state, and repeats the whole process until its final resolution. Finally, if there is no case reopening within the incident resolution time accorded in the MSI SLA, the case moves to a incident resolution state 312 and it is considered as completely closed.

At any time, while a monitoring module raises a control activation, an incident that is in a urgent action, resolution or active monitoring states, can receive the notification that an MSI has been already dismantled. In that case, the process will notify the ISP about such situation, by waiting their confirmation of such event.

During the methods 300 and 400, a complete record of the executed actions is dynamically updated in real time, by allowing full traceability of the whole process. Thus, the R1 requirement is then satisfied. Finally, in all the steps of an incident case, the group in charge of the response is kept informed through electronic alerts.

Since the overall goal is the exposition-time window reduction of the parts affected by the ESI, the procedure results in a maximized effectiveness of coordination between the various modules and stages

Communications

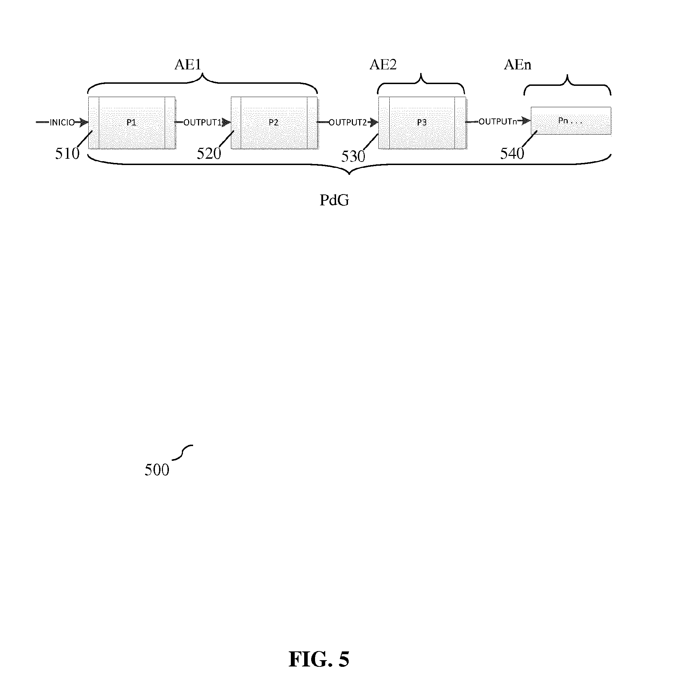

FIG.5 is a diagram 500 that shows the chain 510, 520, 530, 540 of external actors (hereafter AE) whose roles are defined by their responsibility in each of the management process (shown in FIG.2) phases: since the detection of the ESI until its final resolution. Each AE has a specific responsibility within the MP and its tasks are structured into operating procedures P. The execution of each process depends on the result of the upper one, and creates a management chain in which each procedure consists of the following key elements:

- Incoming information (input): P(i)
- Actions set: P(a)
- Outgoing information (output): P(o)

Thus, the Management Process (hereinafter MP) is defined as a set of interdependent processes between the AE involved in the ESI management process, and the total exposure time (hereinafter TTE) of the ESI affected part as the sum of all the procedures times that have formed their chain management:

$$TTE = P1(t) + P2(t) + \ldots + Pn(t) \qquad \text{[expression 5]}$$

To achieve the greatest efficiency in the overall purpose of the invention, i.e. the ESI affected parts *exposition-time window* reduction; a communication protocol between each EA and the core of the proposed system is defined. Such protocol forms a star typology that allows the orchestration of the whole procedures execution and the AE actions synchronization. In addition, such process also consists in obtaining the following metrics and indicators that will be used in further phases in order to continually improve the resources used in the ESI:

- Identification of the AEs that are not meeting the effectiveness agreements.
- Identification of the processes that are causing no habitual delays in the MP
- Identification of the efficiency actions that can be improved within the processes.
- Measurement of the effectiveness of different AEs that are dedicated to the same goal in the MP.
- Measurement of the effectiveness of the procedures that have the same goal and are formed by different set of actions.

The communication protocol is defined in an upper layer in order to allow that its implementation can be carried out regardless of the technology and standards required in each scenario. Thus, an abstraction layer is created in order to automatically coordinate the execution of the AE procedures that may be based on heterogeneous technologies, based in different countries and having different languages. Integration between different NA is then produced in a transparent way by avoiding knowing the existence of other NA at all. Therefore, it is ensured that everyone has access only to the information required by its procedures and its role by occulting the overall MP vision to AE. Thus, it will facilitate the user compliance with the regulatory requirements related to the information security and confidentiality.

The communication protocol implements two security measures that must be accomplished independently of the technology or the programming language elected for its implementation:

- Digital signature of the messages
- Asymmetric signature of the messages content

These mechanisms grant the sender authenticity and the message integrity by allowing the implementation of measures of no repudiation of the information, the compliance to IT and security regulation, and the management of the information of the sector where the invention is implemented.

The fundamental element, that the protocol messages are based on, is the event. It is defined as a sequence of fields defined by the type of the processing event with its associated information. It is also needed the execution of the following process in the MP by the respective AE.

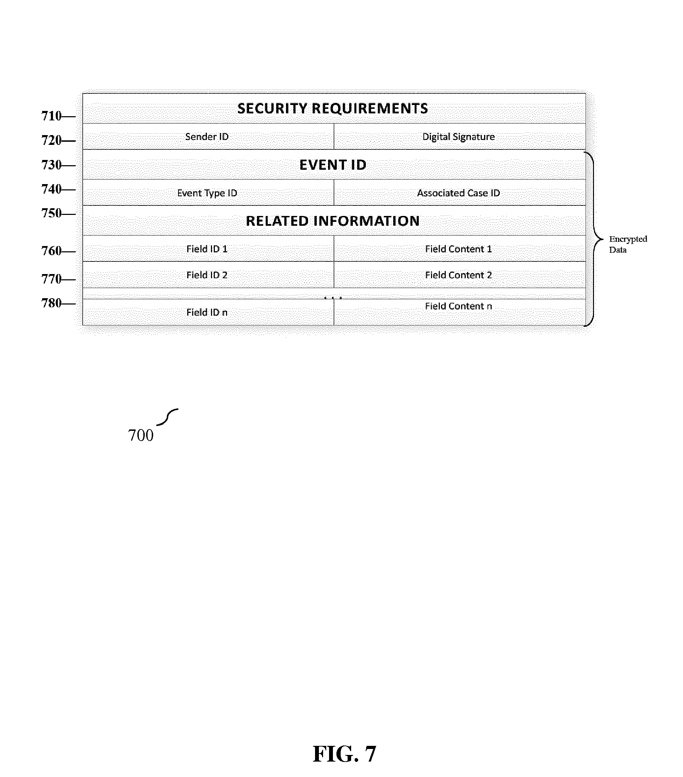

FIG.7 shows an elemental format of the messages of the communication protocol 700:

- **Section** 710: Security Requirements, **Fields** 720 Sender and Digital signature ID

Requirements:

They are mandatory for any message of the protocol. All the received messages that don't contain these fields, or contain invalid data, will be ignored.

Description:

They contain interrelated elements in the KEY-VALUE form and are checked against the list of senders and digital signatures, prior association to each of the AE allowed to participate in the MP with a certain role associated with the event message. All this information is loaded into the database of the invention at the time of provisioning the service for the management of a specific typology of SEIs.

- **Section** 730: Event ID, **Field** 740 Event type ID

Requirements

It consists in a mandatory field that assures that all protocol messages execute concrete action. Any message that does not contain this field, or that its content is not correct, raise a ESI exception.
In case the validation between the sender and its digital signature would have been satisfactory, both the sender of the message and the incident management responsible will be notified.
In case the sender validation would not have been successful, only the management responsible will be notified in order to let them aware about any illegal action that could have been perpetrated against the invention itself.
The event types available for each message will depend on the type of incidents that is used by the invention. They will be stored into the database at the time of the invention implementation, and the invention processes will use them in order to orchestrate the involved AE.
The following are the basic events that are common to any type of incident, but may be extended depending on the nature of the ESI:

• Alert of potential new incident

• Incident confirmation

• Creation of new Incident

• Incident closure

• Alert Rejection

• Rejection of a previously confirmed incident

Description

It identifies the type of action that needs to be executed. Such action will receive the rest of the information included in the message as first input, i.e. the case ID or associated information fields.

• **Section** 730: Event ID, **Field** 740: Case ID

Requirements

This field is not mandatory: in the case the event is a potential incident alert, there will be no Event ID that can be associated.

Description

It will identify the case to which the event will execute the actions referenced in the message.

• **Section** 750: Associated Information, **Field** 770, 780: Field ID(#n and field content(#n)

Requirements

These fields are not mandatory: there are events that don't need additional information.

Description

They will contain information needed as input to the actions associated to the event.

System Architecture

The control module is responsible for selecting the best countermeasure to temporary mitigate the MSI. This module consists of two parts: Automatic Countermeasures (hereinafter ACont) and Manual Countermeasures (hereinafter MCont). ACont consinst in the automatic propagation of firewall rules in order to block all the traffic directed to the MSI. The success of this countermeasure depends on how many security devices are controlled, and how they are geographically distributed. This countermeasure can also rely on an external response provider e.g. a national ISP, which is contracted in order to implement such mitigations measures. In this case, a report containing the MSI information will be automatically sent. The Response Provider is responsible to inform the status of the mitigation process.

MCont consist in directly contacting people who can support the mitigation action. This action is achieved by calling a reliable contact point registry (Point of Trusted Contact, POTC) that has been created during time, through selection and validation processes. Contacts may include SOC, CSIRT, national CERT team leaders, and ISP owners. If the incident requires it, one of these contacts could be telephonically called, in order to facilitate the mitigation of the MSI.

The monitoring module is in charge of automatically verifing if the countermeasures have been correctly deployed. This module simulates the action of a typical Internet user who accesses the malicious infrastructure through an Internet browser. The verification mechanism is composed of three parts: Network Checks (N-Ck), Application Check (A-Ck), and Visual Check (V-Ck). First, when the alert is confirmed, the monitoring module is in charge of saving a target profile (hereafter TP) of the malicious infrastructure, that includes the values generated by N-Ck, A-Ck, V-Ck:

1. Network Check, N-Ck: This check is in charge of monitoring whether malicious infrastructure is still reachable or not through the level three of the TCP / IP protocol suite. In other words it assures that the establishment of a TCP / IP connection to the malicious infrastructure is fulfilled. If this test is negative, it means that the malicious infrastructure has been properly blocked.

2. Application Check, A-Ck: This check is achieved by using the fourth level of the TCP / IP protocol suite. Such service begins a communication with the malicious infrastructure by using its proprietary service protocol, and stores the application response into its TP. When the A-Ck service verifies the connectivity of a malicious infrastructure, it will compare the retrieved application response with the one stored in the TP. If the target does not respond as expected, the verification will be negative, which means that malicious content has been neutralized.

3. Visual check, V-Ck: This check is based solely on what is displayed by the browser of the monitoring module. Such verification makes a visual check between what is seen and what is visually stored in the TP. If the visual difference value exceeds a certain threshold, the check is positive, which means that the content has changed.

The three checks are executed consecutively: every verification is executed only if the previous one has been successful. Thus if N-Ck returns a different value from what has been stored in the TP, the infrastructure has been successfully deleted. In such case, by not executing A-Ck and V-Ck, the overall process saves system resources, and makes the module more agile. If all checks return 1, it means that the MSI status has not changed i.e. it is still active. All checks can be executed within the MSI network or though an external one.

Performance metrics

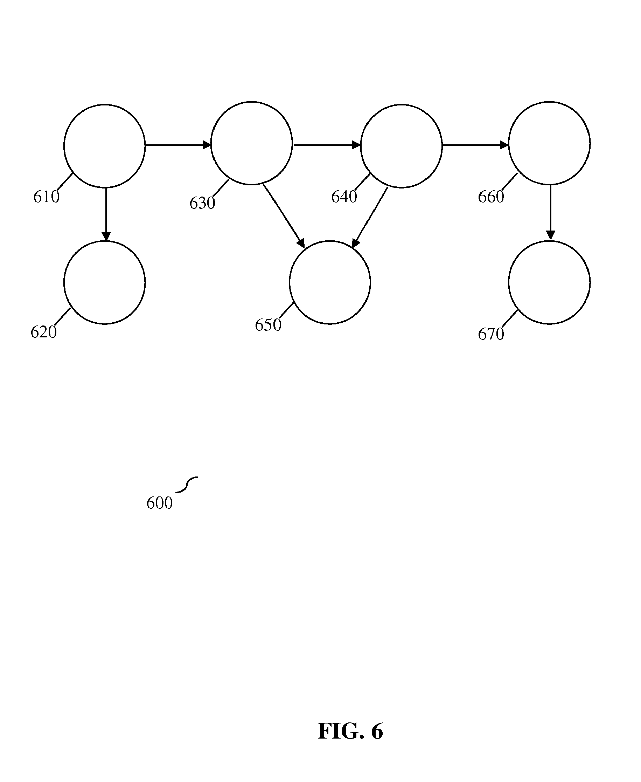

FIG.6 shows a state diagram 600 of a particular case. The state 610 is related to a new state of an alert. The state 620 is related to a rejected alert. The state 630 is related to a new state of an alert that has been confirmed as an incident. The state 640 is related to an open incident state, i.e. the selected countermeasures are in execution. The state 650 is related to an incident rejected by an external agent. The state 660 is related to a close incident state. The state 670 is related to a reopen incident state.

Each state has an input, execution and output time related to it. The performance metrics defined below are used as driver indicators by the control module while executing the algorithms for the selection of the appropriate mitigation measures. Additionally, the quality module also uses them in order to measure the response times with the established SLA by properly reacting in order to fit them properly.

Therefore the following parameters are defined:

a. Tap, the alert processing time allowed to pass the verification process.
b. Tac, alert confirmation.
c. Ttmd, temporary mitigation response deployment time
d. Tcmd, dismantling time, i.e. deployment time of final mitigation actions that complete the mitigation of the MSI.
e. Tro, reopening average time: the time between the Tcmd and the case reopening.
f. Texp, active monitoring time: the maximum time allowed for active monitoring.
g. N, the number of re-openings.

Thus, the UETW is defined as following

$$T = \begin{cases} T_{ap} + T_{ac} + N \times (T_{tmd} + T_{cmd} + T_{ro}) & \text{[expression 7]} \\ T_{ap} + T_{ac} + T_{tmd} + T_{cmd} + T_{\exp} & \text{[expression 8]} \end{cases}$$

Depending on whether the incident reopenings took place (expression 7) or not (expression 8), the function result is different. In any case, by considering that any of them is a polynomial function, it can be deduced that the UETW variation depends on:

- The minimization of all the exposition times, hence T.
- The minimization of the number of reopenings. The R2 requirement is then satisfied.

These performance metrics are inherently linked to the method because it drives it, in the same way the method is linked to the metrics as it is the source for its production and a co-substantial factor of its own morphology that, at the same time, derives from the method's own objective (fixed at the beginning) and the environmental conditions (or prerequisites) that must also satisfy.

From an objective reading of this lecture, the expert reader would derive that various implementations and aspects of the invention have been drafted with the intention of describing them in a concise form. This does not mean that the intention was to limit the protection scope to the exact combination of implementations and written aspects. However, the authors' intention was to let the expert reader to derive that the described features are combinable, and even changing their order, they maintain the same innovative concept.

Furthermore, an expert reader would understand that various realizations might be implemented through hardware, software, firmware, middleware, microcode, or any combination of these. When implementing the proposed systems and/or its methods through software, firmware, middleware, microcode, program code, code segments, or computer program, it may be stored in a computer readable media, e.g. a storage element, a CD, DVD, memory stick, and others. A computer program or code segment may represent a procedure, function, sub-program, program, routine, subroutine, module, a instructions combination or data structures. A code segment may be coupled to another code segment or hardware circuit through the exchange of information, data, arguments, variables, parameters or content stored in memory. The information, arguments, parameters, data, and others can be provided, forwarded or transmitted by using any suitable way for realizing it.

For a software implementation, the described techniques are implemented by means of modules (methods, procedures, functions, and so on) that perform the described functions. The software code may be stored in memory units and executed by processors storage. The storage unit can be integrated within the processor or be external to it, in which case would be communicatively coupled via a variety of means known to a person skilled in the art.

The various aspects and features described in this invention may be implemented through methods, procedures or functions. On the other hand, they can also be implemented through devices, equipment, systems, manufacturing article by using programming and known manufacturing techniques. The term manufacturing article refers to a computer program accessible by any computer device. For example, a computer readable media may include, but is not limited to, magnetic storage devices, e.g. hard disks, floppy disks, etc., optical disks e.g. compact discs versatile CD or DVD, etc., smart cards and flash temporary storage units e.g. EPROM. Additionally, the variety of the described storage media may represent one or more devices and/or computer readable media to store information. The term computer readable media may refers to, without being limited to, a variety of mechanisms able to store, save, or transport instructions and/or data. Additionally, a computer program product may include a computer readable media with one or more instructions or operating codes that make a computer able to perform the described functions once they are executed in the computer.

What has been described includes several exemplary realizations. As it is not possible or feasible to describe in detail all the several combinations and permutations of the inventive concept, which would result in a high number of implementation, the authors believe that the expert reader would derive all of them, without defocusing from the described inventive concept. Therefore, the main realizations were described, by taking in consideration that they may include other combinations, variations and modifications that fall within the protection scope defined by these claims.

Thus, an expert reader would understand that the description of the presented realizations or its figures, does not limit the invention. Instead, the protection scope of the invention is defined only by the following claims.

After further analysis, the expression 1 has been optimized in the following way:

$$A(t) = (C_{cont} + C_a) \times E \times \Delta t \qquad \text{[expression 9]}$$

As first, the protected asset cost function C(t) has been expanded, and the sum between the cost of the applied countermeasure and the cost of the protected asset is now considered. In addition, a time variable has been introduced, by including the importance of the timing factor while calculating the global incident impact: As long the incident is open, its impact cost proportionally increases.

The exposure factor has been also researched in order to improve its definition. Thus, the following expression is proposed:

$$E=I_{type} \times I_{geo} \times I_{goal} \qquad [expression\ 10]$$

The asset exposition factor E is now calculated by the product of the Incident type, the Incident geographic and the Incident goal values. Such values, which can be previously customized, numerically represent the severity of the incident with a 0-5 point scale. It has been evaluated that the incident severity strictly depends on:

- the incident type, e.g. a DDoS attack affects the ISP more than a brand abuse one;
- the geographic position where the MSI is located, e.g. the resolution of the attacks originating from China is faster than the ones originating from Germany.
- the incident goal, e.g. A phishing page that aims at stealing the e-mail login credential has a lesser impact than a malicious page that aims at stealing the credit card information, including the secret number.

Thus, the improved expression will contribute in a better exposition estimation. Such improvement will let the proposed invention able to react to the ESI in a better way, by selecting the opportune (manual or automatic) countermeasures in base of the calculated exposure.

**Claims**

1. Device for the optimized management of security incidents, the device comprising:

    means for receiving at least one security alert;
    means for confirming that the at least one received security alert is a security incident;
    means for performing mitigation actions in order to mitigate the at least one security incident; and
    means for determining the resolution of the at least one security incident.

2. The device according to claim 1, wherein the receiving means comprise means for automatic alert notification and/or means for manual alert notification.

3. The device according to claim 2, further comprising control means for managing the reception, confirmation, mitigation, and resolution means.

4. The device according to claim 2, wherein the means for confirming confirm that an alert is a truthful incident based on, among others, the results derived from alert information and focused on its typology.

5. The device according to claim 3, further comprising means for continually monitoring the resolved incident in order to determine whether the incident has been definitely resolved or whether the incident is a re-incident.

6. The device according to claim 5, wherein the means for confirming comprise the results of the means for monitoring in order to provide a dynamic and more reliable system that takes into account the incident history.

7. The device according to claim 3, further comprising quality control means in order to ensure that the security actions and their impact, comply with the pre-agreed quality agreements.

8. The device according to claim 3, wherein the control means suggest new mitigation strategies based on the information obtained from the resolution and monitoring means.

9. The device according to claim 3, wherein the control means determines the sum of the time necessary to manage an incident, and suggests a combination of mitigation measures in order to minimize the total incident management time.

**10.** The device according to claim 3, wherein the control means determines the number of incident reopening, and suggests a combination of mitigation measures in order to minimize the number of incident reopenings.

**11.** The device according to claim 3, comprising registration means for storing all the actions performed on the at least one incident with its corresponding results.

**12.** The device according to claim 5, wherein the monitoring means comprises network verification means, application verification means and visual verification means, wherein all three verifications are consecutively effected only if the result of the previous verification is positive.

**13.** Method for the optimized management of security incidents, the method comprising:

receiving at least one security alert;
confirming that the at least one received security alert is a security incident;
performing mitigation actions in order to mitigate the at least one security incident; and
determining the resolution of the at least one security incident.

**14.** Computer readable medium comprising instructions for, once executed on a computer, to perform the steps of the method of claim 13.

**15.** System for the optimized management of security incidents, the system comprising at least one device for the notification of security alerts, and at least one device according to any one of claims 1 to 12, wherein the device receives security alerts and mitigates them by using a method for the optimized management of security incidents.

110

130

140

Network

120

100

**FIG. 1**

**FIG. 2**

**FIG. 3**

410　　　420　　　430　　　440　　　450　　　460

400

**FIG. 4**

AE1                                            AE2               AEn

INICIO → P1 → OUTPUT1 → P2 → OUTPUT2 → P3 → OUTPUTn → Pn . . .

510                    520                    530                540

PdG

500

**FIG. 5**

610

620

630

640

650

660

670

600

**FIG. 6**

| SECURITY REQUIREMENTS | |
|---|---|
| Sender ID | Digital Signature |
| **EVENT ID** | |
| Event Type ID | Associated Case ID |
| **RELATED INFORMATION** | |
| Field ID 1 | Field Content 1 |
| Field ID 2 | Field Content 2 |
| ... | |
| Field ID n | Field Content n |

Encrypted Data

700

**FIG. 7**

**EP 2 610 792 A1**

Europäisches
Patentamt

European
Patent Office

Office européen
des brevets

**EUROPEAN SEARCH REPORT**

Application Number

EP 12 19 9153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP007905525, * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-15 | INV. G06Q10/06 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 25 April 2013 | Cîrstet, Andrei |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                    

& : member of the same patent family, corresponding
   document

EPO FORM 1503 03.82 (P04C01)